# EUROPÄISCHE PATENTSCHRIFT

(11) **EP 0 527 159 B1**
(45) Veröffentlichungstag und Bekanntmachung des Hinweises auf die Patenterteilung: **02.11.1994**
(21) Anmeldenummer: 91908190.1
(22) Anmeldetag: 03.05.1991
(51) Int. Cl.: C08H 5/02, C08L 97/00

(54) **VERFAHREN ZUR HERSTELLUNG VON UMWELTFREUNDLICHE, BIOLOGISCH ABBAUBARE FORMMASSEN**
PROCESS FOR PRODUCING ENVIRONMENT-FRIENDLY, BIODEGRADABLE MOULDING COMPOUNDS
PROCEDE POUR LA FABRICATION DE MATIERES MOULABLES ECOPHILES BIODEGRADABLES

(30) Priorität: 03.05.1990 DE 4014176
(43) Veröffentlichungstag der Anmeldung: 17.02.1993
(73) Patentinhaber: IBACH VERWALTUNGSGESELLSCHAFT MBH, D-96120 Bischberg (DE); VON VOSS, Moritz, D-96103 Hallstadt (DE); WASSERSCHEID, Peter, D-96049 Bamberg (DE)
(72) Erfinder: VON VOSS, Moritz, D-8605 Hallstadt/Bamberg (DE); WASSERSCHEID, Peter, D-8600 Bamberg (DE)
(74) Vertreter: Cohausz & Florack Patentanwälte
(86) Internationale Anmeldenummer: EP9100840
(87) Internationale Veröffentlichungsnummer: WO9117199

(56) Entgegenhaltungen:
- GB-A- 454 833
- GB-A- 482 894
- Journal of Applied Polymer Science, vol. 37, No: 8, April 1989, John Wiley & Sons, Inc., (New York, US), T.G. RIALS et al.: "Multiphase materials with lignin. IV. Blends of hydroxypropyl cellulose with lignin", pages 2399-2415, see page 2399, lines 8-11; page 2400, lines 47-49; page 2401, lines 15-24, 35-39
- WPIL, FILE SUPPLIER, AN 79-49791B (27), Derwent Publications Ltd, (London, GB), & JP-B-57 050 192

## Beschreibung

Formmassen für die verschiedensten Zwecke werden in Folienform oder in Form von Schaumstoffen oder dreidimensionalen Formkörpern sehr weitgehend aus synthetischen Polymerprodukten hergestellt. Sie werden in großem Umfang in Folienform zu Verpackungszwecken, als Dämmstoffe oder in der Autoindustrie eingesetzt. Auch dienen sie, z.B. in Flaschenform, zur Verpackung von Flüssigkeiten.

Ein großes Problem bei derartigen Verpackungsmaterialien wie auch anderen Formteilen aus herkömmlichen Kunststoffen ist unter dem Gesichtspunkt des Umweltschutzes darin zu sehen, daß sie weder durch Verbrennen noch in sonstiger Weise nach ihrer Verwendung unbedenklich beseitigt werden können. Vielfach entstehen bei ihrer Verbrennung auch schädliche Abgase (wie HCl bei Polyvinylchlorid). Manche können zwar durch Recyklieren wiederverwendet werden, jedoch ist die Neuherstellung derartiger synthetischer Polymerisate in so großem Umfang eingefahren, daß die Probleme der Beseitigung hiermit hergestellter Produkte immer größer werden.

Allerdings werden gerade zu Verpackungszwecken auch Produkte eingesetzt, die aus natürlichen Ressourcen hergestellt wurden, wie Packpapier.

Das Dokument Journal of Applied Polymer Science, Vol. 37, 1989, Nr 8, Seiten 2401-2415, beschreibt verschiedene Mischungen aus Lignin und Hydroxypropylcellulose HPC, deren Lignin-Konzentrationen zwischen 0 und 80% bzw.70% (Gewicht) varieren ( siehe Fig.2 bzw. Tabelle II ). Diese Mischungen werden anschließend durch Spritzgießen bei 170°C weiter verarbeitet ( Seite 2401," preparation of blends").

Die Patentschrift : GB-A-482 894 beschreibt ein Verfahren zur Herstellung von formbaren Artikeln, wobei eine Mischung aus Lignin und Cellulose (α-Cellulose z.B.) durch Pressen und Erhitzen verarbeitet wird ( Seite 2, Zeilen 118-seite 3, Z.4 ).

Das Verhältnis Lignin / Cellulose ist nicht ausdrücklich offenbart.

Aufgabe der vorliegenden Erfindung ist ein Verfahren zur Herstellung von Formmassen, die z.B. bei der Herstellung von Verpackungsmaterialien eingesetzt werden können, die preiswert sind und die auch ohne Verbrennung beseitigt werden können.

Die erfindungsgemäßen Formmassen sind dadurch gekennzeichnet, daß sie aus den natürlichen Ausgangsprodukten Lignin und Cellulose hergestellt sind und biologisch abbaubar sind. Auf diese Weise ist eine Verbrennung zur Beseitigung der verbrauchten Materialien oder eine Recyclierung der Materialien nicht mehr notwendig.

Das erfindungsgemäße Verfahren ist dadurch gekennzeichnet, daß Lignin, das bei der Zellstoffherstellung als natürlicher Bestandteil des Holzes als Nebenprodukt anfällt und heute nur als Viehfutter oder Füllstoff in Polymerblends Einsatz findet, insbesondere das im sog. Organosolv-Verfahren zur Herstellung von Cellulose in großen Mengen anfällt, als Ausgangsprodukt eingesetzt wird und zusammen mit Cellulose, sei es aus Holzprodukten oder Baumwolle, polymerisiert wird. Das Lignin-Ausgangsprodukt wird im Gemisch mit den Celluloseprodukten zuerst bei 80° bis 120°C gearbeitet, das Reaktionsgemisch, z.B. unter ionischen Polymerisationsbedingungen, bei auf 150 - 200°C erhöhter Temperatur polymerisiert und das erhaltene Produkt sodann unter üblichen Bedingungen verformt. Vorzugsweise werden die beiden Ausgangsprodukte in Pulverform vermischt und das erhaltene Gemisch auf erhöhte Temperatur im angegebenen Bereich erhitzt, bis es den vollplastischen Zustand erreicht hat.

Soll zusätzlich gerichtete textile Verstärkung (großmaschige Gewebe) eingebracht werden, so geschieht dies nach jeweils 1 bis 2 mm Dicke in unidirektoraler oder multidirektoraler Weise.

Die folgenden Beispiele erläutern das erfindungsgemäße Verfahren und die hierbei hergestellten Produkte:

### Beispiel 1

100 g ionenfreies Lignin in trockener Form wird mit 10 g Cellulose (Sorte FIF 400, BSCH 750) sowie 100 ml destilliertem Wasser zu einer klebrig-zähen Masse verrührt. Dieses Gemisch wird bei Zimmertemperatur 40 bis 60 Stunden umgesetzt.

In Schichten von 5 bis 6 mm Dicke wird die Masse dann in die Formschale aus wärmebeständigem Glas gegeben. Das erhaltene Produkt trocknet bei 100°C 60 Minuten im Ofen. Alle 20 min. ist es dabei notwendig, überflüssiges entstandenes Wasser durch Verpressen aus der Probe zu entfernen. Dieser Vorgang reduziert den für die Polymerisation notwendigen Wassergehalt auf ein Mindestmaß. Sodann wird die Temperatur auf 178°C erhöht und das Produkt sofort beim Erreichen dieser Temperatur entnommen. Die vollplastische Masse wird nun mit maximal 1,5 kN mit Hilfe von Schraubzwingen verpresst. Nach 15 Minuten Abkühlen kann man auf der Rückseite des Glases das Ablösen des Stoffes von der Form beobachten. Das Formteil fällt aus der Form.

### Beispiel 2

100 g aschefreies Lignin in Form eines trockenen Pulvers werden mit 5 g Cellulose (Sorte FiF 400, BSCH 750) zu einem homogenen, pulverigen Gemisch verrührt. Das pulverförmige Gemisch wird langsam auf erhöhte Temperatur erhitzt. Hat das Stoffgemisch eine homogene Temperatur von 190°C erreicht, so liegt es vollplastisch vor und wird kunststoffspezifisch verarbeitet.

### Beispiel 3

100 g aschefreies Lignin in Form eines trockenen Pulvers werden mit 50 g Cellulose der im Beispiel 2 angegebenen Sorten zu einem homogenen, pulverigen Gemisch verrührt und wie im Beispiel 2 angegeben erhitzt. Hat das Stoffgemisch eine Temperatur von 178°C erreicht, liegt es vollplastisch vor und wird in üblicher Weise verarbeitet und verformt.

## Patentansprüche

1. Verfahren zur Herstellung einer umweltfreundlichen, biologisch abbaubaren Formmasse, bestehend aus einem Polymerisat aus Lignin und Cellulose, **dadurch gekennzeichnet,** daß 1 bis 20 Gew.-Teile Lignin und 1 Gew.-Teil natürliche Cellulose vermischt und das Gemisch auf 150 bis 200°C erhitzt wird und das erhaltene vollplastische Produkt zur endgültigen Form in üblicher Weise verformt wird.

2. Verfahren nach Anspruch 1, dadurch gekennzeichnet, daß das vollplastische Produkt unter Druck zur endgültigen Form verformt wird.

3. Umweltfreundliche, biologisch abbaubare Formmasse bestehend aus Polymerisat aus Lignin und Cellulose, hergestellt gemäß Patentanspruch 1 oder 2.

4. Verwendung der gemäß den Ansprüchen 1 oder 2 hergestellten Produkte gemäß Anspruch 3 als Verpackungsstoffe, als Dämmstoffe und in der Autoindustrie.

## Claims

1. A process for the production of an environment-friendly, biodegradable moulding consisting of a polymer of lignin and cellulose, characterized in that 1 to 20 parts by weight of lignin and 1 part by weight of natural cellulose are mixed together, the mixture is heated to 150 to 200°C, and the full plastic product is shaped in the usual manner to give the final shape.

2. A process according to claim 1, characterized in that the full plastic product is shaped under pressure to give the final shape.

3. An environment-friendly, biodegradable moulding compound consisting of polymer of lignin and cellulose, produced according to claims 1 or 2.

4. Use of the products according to claim 3, produced according to claims 1 or 2, as packaging materials, insulating materials and in the motor car industry.

## Revendications

1. Procédé de fabrication d'une matière moulable non polluante, biodégradable, constituée d'un polymère de lignine et de cellulose, caractérisé en ce qu'on mélange 1 à 20 parties en poids de lignine et 1 partie en poids de cellulose naturelle en ce qu'on chauffe le mélange à 150 à 200 °C, et en ce qu'on façonne à la manière habituelle le produit plastique obtenu jusqu'à sa forme définitive.

2. Procédé selon la revendication 1, caractérisé en ce que le produit plastique est façonné sous pression jusqu'à sa forme définitive.

3. Matière moulable non polluante, biodégradable, constituée d'un polymère de lignine et de cellulose, fabriqué selon le procédé de la revendication 1 ou 2.

4. Utilisation du produit selon la revendication 3, fabriqué selon la revendication 1 ou 2 comme matériau d'emballage, comme matériau isolant et dans l'industrie automobile.
